## Europäisches Patentamt
## European Patent Office
## Office européen des brevets

(11) Veröffentlichungsnummer: **0 136 460**
**A2**

(12) **EUROPÄISCHE PATENTANMELDUNG**

(21) Anmeldenummer: **84109076.4**

(22) Anmeldetag: **01.08.84**

(51) Int. Cl.⁴: **A 23 L 1/04**

(30) Priorität: **11.08.83 DE 3329071**

(43) Veröffentlichungstag der Anmeldung:
**10.04.85 Patentblatt 85/15**

(84) Benannte Vertragsstaaten:
**AT BE CH FR LI NL**

(71) Anmelder: **Pektin-Fabrik Hermann Herbstreith KG
Postfach 23
D-7540 Neuenbürg/Württ.(DE)**

(72) Erfinder: **Fox, Gerhard F.
Hintere Schlosssteige 45
D-7540 Neuenbürg/Württ.(DE)**

(74) Vertreter: **Sroka, Peter-Christian, Dipl.-Ing. et al,
Patentanwälte Sroka, Feder, Feder Rechtsanwalt Walter
Dominikanerstrasse 37
D-4000 Düsseldorf 11(DE)**

(54) Verfahren zur Herstellung von Geliermitteln.

(57) Gegenstand der Erfindung ist ein Verfahren zur Herstellung von Geliermitteln aus feinteiligem Gelierstoff, feinteiliger Genußsäure sowie gegebenenfalls Zucker und/oder üblichen Zusatzstoffen, bei dem man auf die Oberfläche der Genußsäure oder des Gelierstoffes einen Hüllstoff aufbringt und danach, vorzugsweise bei erhöhter Temperatur, zu der zumindest teilweise umhüllten Komponente den Gelierstoff bzw. die Genußsäure zusetzt, gegebenenfalls auf Zimmertemperatur abkühlen läßt, wonach gegebenenfalls Zucker bzw. die Zusatzstoffe zugefügt werden. Ferner wird ein nach diesem Verfahren hergestelltes Geliermittel beschrieben und beansprucht.

EP 0 136 460 A2

Pektin-Fabrik

Hermann Herbstreith KG.

Postfach 23

7540 Neuenbürg / Württ.

Verfahren zur Herstellung von Geliermitteln.

==========================================

Die vorliegende Erfindung betrifft Geliermittel sowie
Verfahren zur Herstellung von solchen Geliermitteln aus
Gelierstoff, Genußsäure sowie gegebenenfalls Zucker
und/oder üblichen Zusatzstoffen.

Es ist seit langer Zeit bekannt, z.B. zur Herstellung
von Konfitüren und Gelees Geliermittel einzusetzen. Bekannte Geliermittel enthalten beispielsweise einen Gelierstoff, eine Genußsäure und in der Regel Zucker sowie gegebenenfalls weitere Zusatzstoffe, wobei diese Komponenten im allgemeinen in feinteiliger Form und in inniger Mischung miteinander vorliegen.

Es hat sich nun herausgestellt, daß derartige Geliermittel unter den üblichen Lagerungsbedingungen nur eine gegrenzte Stabilität aufweisen. Insbesondere bei Zutritt von Feuchtigkeit kann die Gelierkraft der bekannten Geliermittel innerhalb von einem Jahr um mehr als 50 % zurückgehen.

Ein weiterer Nachteil bei Arbeiten mit bekannten Geliermitteln ist, daß bei der Herstellung von Konfitüren und Gelees insbesondere im Haushalt eine starke Schaumbildung auftreten kann. Dieses ist besonders bei Verwendung von gartenfrischen, proteinreichen Früchten zu beobachten und führt sehr oft dazu, daß die Hausfrau von den vorgeschlagenen Bedingungen des Einkochverfahrens abweicht und die Kochzeit verkürzt oder die Erhitzungstemperatur vermindert. Das hat einen zu niedrigen Trockensubstanzgehalt in der Konfitüre oder im Gelee zur Folge, was wiederum zu ungenügender Gelfestigkeit und Haltbarkeit führt.

Ferner sind oft die bekannten Geliermittel deshalb nicht zufriedenstellend, weil die Gelierstoffe zu langsam und manchmal auch nur unvollständig in Lösung gehen und daher den beabsichtigten Zweck nicht in dem gewünschten Umfang erfüllen können.

Aufgabe der vorliegenden Erfindung ist die Schaffung von Geliermitteln mit sehr guten Auflösungseigenschaften und verbesserter Geliercharakteristik, insbesondere stabiler Gelierkraft auch nach längerer Lagerung. Des weiteren soll es mit dem erfindungsgemäßen Geliermittel möglich sein, z.B. Konfitüren und Gelees - auch bei Zubereitung durch die Hausfrau - mit guter Gelfestigkeit und Haltbarkeit herzustellen. Bei der Herstellung dieser Produkte soll eine übermäßige Schaumbildung auch bei Verwendung gartenfrischer, proteinreicher Früchte verhindert werden.

- 3 -

Gegenstand der vorliegenden Erfindung ist ein Verfahren zur Herstellung von Geliermitteln aus Gelierstoff, Genußsäure sowie gegebenenfalls Zucker, und/oder üblichen Zusatzstoffen, das dadurch gekennzeichnet ist, daß man auf die Oberfläche der Genußsäure oder des Gelierstoffes einen Hüllstoff aufbringt und danach, vorzugsweise bei erhöhter Temperatur, zu der zumindest teilweise umhüllten Komponente den Gelierstoff bzw. die Genußsäure zusetzt, gegebenenfalls auf Zimmertemperatur abkühlen läßt, wonach gegebenenfalls Zucker bzw. die Zusatzstoffe zugefügt werden.

Ein weiterer Gegenstand der Erfindung ist ein derart hergestelltes Geliermittel, das dadurch gekennzeichnet ist, daß es jeweils in feinteiliger Form einen Gelierstoff und eine Genußsäure, wobei die Teilchen von einer oder von beiden dieser Komponenten zumindest teilweise mit einem Hüllstoff umhüllt sind, sowie gegebenenfalls Zucker und/oder übliche Zusatzstoffe umfaßt.

Zu den Komponenten der erfindungsgemäßen Geliermittel zählt also in erster Linie ein Gelierstoff, wie er an sich bekannt und als Zusatzstoff zu Lebensmitteln geeignet ist. Vorzugsweise werden als Gelierstoff die von den Behörden der Europäischen Gemeinschaft zugelassenen Stoffe Pektin (EWG-Nr. E 440a) und amidiertes Pektin (EWG-Nr. E 440b) verwendet.

Auch eine Vielzahl von in Geliermitteln zweckmäßig verwendbaren Genußsäuren sind bereits bekannt. Erfindungsgemäß werden folgende Verbindungen bervorzugt:
Zitronensäure, Milchsäure, Weinsäure, D-Äpfelsäure, L-Äpfelsäure, DL-Äpfelsäure, L-Ascorbinsäure, Bernsteinsäure, Gluconsäure und Glucono-delta-lacton.

Von diesen Stoffen werden insbesondere die Milchsäure, Zitronensäure, Weinsäure und L-Ascorbinsäure eingesetzt. In

0136460

jedem Fall können die entsprechenden Verbindungen mit unterschiedlichem Gehalt an Kristallwasser oder ohne dieses verwendet werden, wobei für die kristallinen bzw. pulvrigen
Materialien unterschiedliche Vermahlungsgrade möglich sind.
So geben beispielsweise Teilchengrößen über 200 /u, wie beispielsweise 200 bis 500 /u ausgezeichnete Ergebnisse, wobei
selbstverständlich darauf geachtet werden sollte, daß das
Material für das ausgewählte Beschichtungsverfahren möglichst gut geeignet ist.

Als erfindungsgemäß verwendbare Überzugs- bzw. Umhüllungsmittel kommen eine Vielzahl von verschiedenen Stoffen in
Frage. So können beispielsweise folgende Materialien verwendet werden:
Speisefette, Mono-, Di- und Triglyceride von Speisefettsäuren, Alkalisalze der Ölsäure, Cumeron-Inden-Harze, Kopal,
Montansäureester, Polyäthylenwachsoxidate, Bienenwachs,
Carnaubawachs, Benzoeharz, Candelillawachs, Mastix, Sandaraharz, Schellack und Celluloseäthylenphthalat.
Besonders gut eignet sich gehärtetes Pflanzenfett mit einem
Schmelzpunkt im Bereich von 35 bis 45 °C.

Selbstverständlich sollte auch hinsichtlich der Auswahl des
Materials für den Hüllstoff darauf geachtet werden, daß dieses für die beabsichtigte Methode des Aufbringens gut geeignet ist.

Des weiteren sollen auch die Hüllstoffe auf dem Lebensmittelgebiet unbedenklich und leicht verdaulich sein und Löslichkeitseigenschaften haben, die für das entsprechende
Geliermittel zweckmäßig sind. So ist es vorteilhaft, daß
die erfindungsgemäß behandelten Genußsäuren eine retardierte, beschränkte oder völlig verhinderte Kaltlöslichkeit
aufweisen, sich aber während des Erhitzungsvorgangs bei
der Bereitung von Konfitüren etc. innerhalb eines geeigneten
Zeitraums auflösen. Es ist vorteilhaft, wenn sich die
Genußsäure erst dann im vorliegenden System lösen kann,

0136460

wenn alle anderen Stoffe, insbesondere das Geliermittel, in Lösung gegangen sind, und dem technologische Zweck vollständig zur Verfügung stehen.

Ein weiterer üblicher Bestandteil, insbesondere von Haushaltgeliermitteln, ist ein genießbares Kohlenhydratmaterial (im Rahmen der vorliegenden Anmeldung kurz mit dem Begriff "Zucker" bezeichnet). Als derartige Kohlenhydrate können erfindungsgemäß vorzugsweise Saccharose, Dextrose, Fructose oder Sorbit eingesetzt werden.

Schließlich kann das erfindugnsgemäße Geliermittel auch noch andere für diesen Zweck an sich bekannte Zusatzstoffe, wie Stabilisierungsmittel, Antioxidationsmittel, Aromastoffe und dergleichen, in untergeordneten Mengen enthalten.

Das Aufbringen des Hüllstoffes auf die Genußsäure kann auf jede zweckmäßige Weise geschehen. So kann dieses durchgeführt werden, indem ein Vermischen des Hüllstoffes und der Genußsäure erfolgt, wobei der Hüllstoff vor, während oder nach der Vermischung durch Erwärmen fließbar gemacht wird.

Eine weitere spezielle Ausführungsform des erfindungsgemäßen Verfahrens sieht das Aufbringen des Hüllstoffes auf die Genußsäure im Wirbelbett in an sich bekannter Weise bei erhöhter Temperatur vor.

Der Hüllstoff kann jedoch auch durch Aufsprühen durch eine beheizte Düse aufgebracht werden, wobei es auch möglich ist, die Methode im Rahmen des Wirbelbett-Verfahrens durchzuführen.

Sofern nicht der Hüllstoff als solcher sondern eine Lösung von diesem angewendet wird, ist es nicht notwendig, diesen selbst durch Erhitzen fließfähig zu machen. Die Auswahl der bei dieser Ausführungsform des erfindungsgemäßen Verfahrens verwendeten Lösungsmittel ist nicht kritisch.
Diese sollen zweckmäßig ein ausreichendes Lösungsvermögen
für den Hüllstoff haben und genügend flüchtig sein, damit
eine schnelle Verflüchtigung des Lösungsmittels nach dem
Aufbringen des Hüllstoffes gewährleistet ist. Auch hier
ist eine erhöhte Verarbeitungstemperatur, bzw. eine Erwärmung der Hüllstoff-Lösung einer raschen Abtrocknung des
Lösungsmittels dienlich.

Es ist vorteilhaft, den Gelierstoff erst dann zu der so
beschichteten Genußsäure zu geben, wenn die Temperatur
von letzterer über dem Erstarrungspunkt des Hüllstoffes
liegt, jedoch nicht beträchtlich höher als diese ist.
Somit ist es also zweckmäßig, nach dem Aufbringen des
Hüllstoffes auf die Genußsäure das Material entsprechend
abzukühlen bzw. abkühlen zu lassen. Wenn man in dieser
Weise arbeitet, wird zumindest ein Teil des Gelierstoffes
wenigstens etwas in die erweichte Umhüllung eindringen
können und dort nach dem Erstarren des Hüllstoffes verbleiben. Dieses hat den Vorteil, daß der Gelierstoff bei der
späteren Verwendung des Geliermittels noch mehr beschleunigt in Lösung geht.

Die Mengen der oben genannten Komponenten sind innerhalb
eines weiten Bereichs nicht kritisch. So werden im allgemeinen gute Ergebnisse erzielt, wenn die Gewichtsmenge
an Gelierstoff zu der Gewichtsmenge an der Genußsäure
zwischen 3:2 und 3:4 beträgt.

In gleicher oder ähnlicher Weise, wie die erfindungsgemäß
zumindest teilweise durchgeführte Umhüllung der feinteiligen Genußsäure erfolgt, kann auch eine Umhüllung der Teilchen des Gelierstoffes vorgenommen werden, wobei das Aufbringen des Hüllstoffes zweckmäßig vor Beginn des erfindungsgemäßen Verfahrens durchgeführt wird. Für diesen
Zweck können grundsätzlich die gleichen Hüllstoffmaterialien verwendet werden, wie sie oben im Zusammenhang mit
der Behandlung der Genußsäre angegeben worden sind.

0136460

Wie bereits ausgeführt, ist es insbesondere zur Herstellung von üblichen Haushaltsgeliermitteln vorgesehen, daß der Kombination aus der zumindest teilweise umhüllten Genußsäure und dem Gelierstoff Zucker, sowie gegebenenfalls die anderen üblichen Zusatzstoffe zugefügt werden. Diese Zugabe erfolgt zweckmäßig nach Abkühlung auf Zimmertemperatur. Die Menge an Zucker, bezogen auf die Menge an den übrigen Bestandteilen, d.h. Gelierstoff, Genußsäure, Hüllsubstanz sowie gegebenenfalls üblichen Zusatzstoffen, beträgt vorzugsweise etwa 0,5 bis 10 Gew.%.

Sämtliche Mischvorgänge, einschließlich das Aufbringen des verflüssigten Hüllstoffes bzw. der Hüllstofflösung, können in handelsüblichen Vorrichtungen durchgeführt werden. Das gilt selbstverständlich auch für das Aufbringen des Hüllstoffes bzw. der Hüllstofflösung durch eine Düse, welche notwendigenfalls auf eine ausreichende Temperatur beheizt werden muß, um eine Verstopfung zu vermeiden.

Bei entsprechender Verfahrensführung kann das erfindungsgemäße Verfahren auch als kontinuierliches Verfahren durchgeführt werden.

Die nachfolgende Beispiele dienen zur Erläuterung der vorliegenden Erfindung:

Beispiel 1

41,1 Gew.-Teile wasserfreie Zitronensäure werden gemahlen und die Teilchen mit einer Korngröße mit mehr als 200 $\mu$ abgetrennt. Diese Zitronensäurefraktion wird in einem beheizbaren Mischer auf 50 bis 55 $^\circ$C erwärmt.

4,1 Gew.-Teile gehärtetes pflanzliches Fett mit einem Schmelzpunkt von 42 bis 44 $^\circ$C werden ebenfalls auf eine Temperatur von 50 bis 55 $^\circ$C gebracht und dadurch verflüssigt. Das Mischen der Zitronensäure mit dem verflüssigten Fett geschieht bei 50 bis 55 $^\circ$C und wird 20 Minuten lang durchgeführt. Danach läßt man die so erhaltene umhüllte
Zitronensäure auf 40 bis 44 $^{o}$C abkühlen.

54,8 Gew.-Teile Apfelpektin (mittelverestert, 210 $^{o}$ US-SAG)
werden ohne vorheriges Erwärmen mit der mit dem Hüllstoff
versehenen Zitronensäure der genannten Temperatur gründlich
vermischt.

Nach dem Abkühlen der Mischung auf Zimmertemperatur wird
Fruchtzucker in einem Gewichtsverhältnis von 35:965 zugesetzt, wobei das fertige Geliermittel erhalten wird.

Beispiel 2
41,1 Gew.-Teile von wasserfreier Zitronensäure mit einer
Korngröße von 200 bis 500 ,u werden in einem handelsüblichen
Wirbelbettmischer im Heißluftstrom auf eine Temperatur
von 45 $^{o}$C erwärmt.

4,1 Gew.-Teile gehärtetes pflanzliches Fett mit einem
Schmelzpunkt von 42 bis 44 $^{o}$C werden auf dieselbe Temperatur erwärmt und dadurch verflüssigt.

Über eine beheizte Düse wird das verflüssigte Fett auf
die Oberfläche der Zitronensäure aufgebracht, wobei die
Zufuhr zu der Düse durch eine Schlauchpumpe erfolgt.
Eine Mischzeit von 5 bis 15 Minuten ist ausreichend. Die
so umhüllte Zitronensäure läßt man auf 40 bis 44 $^{o}$C abkühlen, wonach 54,8 Gew.-Teile Apfelpektin (mittelvererstert,
250$^{o}$ US-SAG) in gleicher Weise wie in Beispiel 1 zugefügt
werden.

Das erhaltene Produkt kann nach Abkühlung durch Vermischen
mit einer ähnlichen Menge Zucker wie in Beispiel 1 zu
einem Haushaltsgeliermittel verarbeitet werden.

Beispiel 3
41,2 Gew.-Teile wasserfreie Zitronensäure werden ein einem beheizten Mischaggregat auf 50 bis 55 $^O$C vorgewärmt.

3,8 Gew.-Teile gehärtetes Pflanzenfett mit einem Schmelzpunkt von 42 bis 44 $^O$C werden über diesen Schmelzpunkt
erwärmt und dadurch verflüssigt. Durch eine beheizte Düse
wird das Fett in den Mischer auf die Oberfläche der Säureteilchen aufgesprüht. Die Mischung wurde ebenfalls bei
einer Temperatur von 50 bis 55 $^O$C vorgenommen, wonach
die umhüllte Zitronensäure in einem langsam drehenden
Kühlmischer überführt und dort auf 40 bis 44 $^O$C abgekühlt
wird. In diesem Mischer werden 37,7 Gew.-Teile Apfelpektin
(mittelverestert, 210$^O$ US-SAG) auf die umhüllte Oberfläche
der Zitronensäure über eine Dosierungseinrichtung aufgebracht. Nach homogener Verteilung wird das Produkt in
einen Zwischenbehälter übergeführt, so daß der Kühlmischer
wieder verfügbar ist. Aus diesem Zwischenbehälter gelangt
das Produkt in ein weiteres Kühlaggregat mit Kühlschnecke,
worin die Abkühlung auf 20 bis 25 $^O$C bis zur Austragung
erfolgt.

## Beispiel 4

Aus den Komponenten:
26,5 Gew.-Teile Apfelpektin (mittelverester, 21$^O$ US-SAG),
34 Gew.-Teile pulverisierte, wasserfreie Zitronensäure,
6 Gew.-Teile gehärtetes pflanzliches Fett mit einem Schmelzpunkt von 42 bis 44 $^O$C,
33,5 Gew.-Teile Puderzucker
wurde nach dem Verfahren von Beispiel 3 ein Gelierkonzentrat
hergestellt. Die Zugabe des Puderzuckers erfolgte jedoch
auf die Oerfläche der umhüllten Zitronensäure in dem
Kühlmischer bei einer Temperatur von etwa 40 $^O$C vor der
Zugabe des Apfelpektins. Dieses wurde erst danach zugegeben, nachdem auch eine Abkühlung der umhüllten Zitronensäure mit dem Puderzucker auf etwa 30 $^O$C erfolgt ist.

0136460

Patentansprüche

1. Verfahren zur Herstellung von Geliermitteln aus feinteiligem Gelierstoff, feinteiliger Genußsäure sowie
gegebenenfalls Zucker und/oder üblichen Zusatzstoffen,
dadurch gekennzeichnet daß man auf die Oberfläche
der Genußsäure oder des Gelierstoffes einen Hüllstoff
aufbringt und danach, vorzugsweise bei erhöhter Temperatur, zu der zumindest teilweise umhüllten Komponente
den Gelierstoff bzw. die Genußsäure zusetzt, gegebenenfalls auf Zimmertemperatur abkühlen läßt, wonach gegebenenfalls Zucker bzw. die Zusatzstoffe zugefügt werden.

2. Verfahren nach Anspruch 1, dadurch gekennzeichnet, daß
das Aufbringen des Hüllstoffes auf die Genußsäure durch
gründliches Vermischen erfolgt, wobei der Hüllstoff vor,
während oder nach der Vermischung durch Erhitzen fließbar gemacht wird.

3. Verfahren nach Anspruch 1 bis 2, dadurch gekennzeichnet,
daß das Aufbringen des Hüllstoffs auf die Genußsäure bei
erhöhten Temperaturen im Wirbelbett erfolgt.

4. Verfahren nach Anspruch 1 bis 3, dadurch gekennzeichnet,
daß das Aufbringen des Hüllstoffes auf die Genußsäure
durch Aufsprühen durch eine beheizte Düse erfolgt.

5. Verfahren nach Anspruch 1 bis 4, dadurch gekennzeichnet,
daß das Aufbringen des Hüllstoffes auf die Genußsäure
durch Aufsprühen einer Lösung des Hüllstoffes in einem
Lösungsmittel, vorzugsweise bei erhöhter Temperatur,
erfolgt.

6. Verfahren nach Anspruch 1 bis 5, dadurch gekennzeichnet, daß der Zusatz des Gelierstoffes bei einer Temperatur erfolgt, welche über dem Erstarrungspunkt des Hüllstoffes liegt, jedoch nicht beträchtlich höher ist als dieser.

7. Verfahren nach Anspruch 1 bis 6, dadurch gekennzeichnet, daß als Genußsäure mindestens eine der folgenden Säuren verwendet wird: Zitronensäure, Milchsäure, Weinsäure, D-Äpfelsäure, L-Äpfelsäure, DL-Äpfelsäure, L-Ascorbinsäure, Bernsteinsäure, Gluconsäure und Clucono-delta-lacton.

8. Verfahren nach Anspruch 1 bis 7, dadurch gekennzeichnet, daß als Gelierstoff natürliches Pektin oder amidiertes Pektin verwendet wird.

9. Verfahren nach Anspruch 1 bis 8, dadurch gekennzeichnet, daß sowohl der Gelierstoff als auch die Genußsäure ganz oder teilweise mit einem Hüllstoff umhüllt sind.

10. Verfahren nach Anspruch 1 bis 9, dadurch gekennzeichnet, daß als Hüllstoff Speisefette, Mono-, Di- und Triglyceride von Speisefettsäuren, Alkalisalze der Ölsäure, Cumeron-Inden-Harze, Kopal, Montansäureester, Polyäthylenwachsoxidate, Bienenwachs, Carnaubawachs, Benzoeharz, Candelillawachs, Mastix, Sandraharz, Schellack bzw. Celluloseäthylenphthalat verwendet wird.

11. Verfahren nach Anspruch 1 bis 10, dadurch gekennzeichnet, daß als Hüllstoff ein gehärtetes Pflanzenfett mit einem Schmelzpunkt im Bereich von 35 bis 45°C verwendet wird.

12. Verfahren nach Anspruch 1 bis 11, dadurch gekennzeichnet, daß die Gewichtsmenge an Gelierstoff zu der Gewichtsmenge an der Genußsäure zwischen 3:2 und 3:4 beträgt.

0136460

13. Verfahren nach Anspruch 1 bis 12, dadurch gekennzeichnet, daß als Zucker Saccarose, Dextrose, Fructose oder Sorbit verwendet wird.

14. Verfahren nach Anspruch 1 bis 13, dadurch gekennzeichnet, daß die kombinierte Menge an Gelierstoff, Genußsäure und Hüllsubstanz sowie gegebenenfalls dem üblichen Zusatz zu der Menge an Zucker, etwa 0,5 bis 10 Gew.-% beträgt.

15. Geliermittel, dadurch gekennzeichnet, daß es in feinteiliger Form einen Gelierstoff und eine Genußsäure, wobei die Teilchen von einer oder von beiden dieser Komponenten zumindest teilweise mit einem Hüllstoff umhüllt sind, sowie gegebenenfalls Zucker und/oder übliche Zusatzstoffe umfaßt.

16. Geliermittel nach Anspruch 15, dadurch gekennzeichnet, daß der Gelierstoff zumindest teilweise auf der Oberfläche der Umhüllung der Genußsäure bzw. in dem Hüllstoff vorliegt.

17. Geliermittel nach Anspruch 15 bis 16, dadurch gekennzeichnet, daß es als Genußsäure Zitronensäure, Milchsäure, Weinsäure, D-Äpfelsäure, L-Äpfelsäure, DL-Äpfelsäure, L-Ascorbinsäure, Bernsteinsäure, Gluconsäure bzw. Glucono-delta-lacton enthält.